# EUROPÄISCHE PATENTANMELDUNG

(11) **EP 3 264 040 A1**
(43) Veröffentlichungstag der Anmeldung: **03.01.2018**
(21) Anmeldenummer: 16177223.1
(22) Anmeldetag: 30.06.2016
(51) Int. Cl.: G01C 15/00

(54) **VERFAHREN ZUM VERGLEICHEN EINES AUF EINEN LASEREMPFÄNGER AUFTREFFENDEN EMPFANGSSTRAHLS MIT EINEM ROTIERENDEN LASERSTRAHL**

(71) Anmelder: HILTI Aktiengesellschaft, 9494 Schaan (LI)
(72) Erfinder: Lukic, Sasha, 9470 Buchs (CH); Halasi, Andras, 6800 Feldkirch (AT); Kearney, Ian, 6800 Feldkirch (AT); Calkic, Ermin, 9470 Buchs (CH)
(74) Vertreter: Hilti Aktiengesellschaft Corporate Intellectual Property

(57) **Zusammenfassung**

Verfahren zum Vergleichen eines auf einen Laserempfänger (12) auftreffenden Empfangsstrahls (24) mit einem rotierenden Laserstrahl (22), der von einem Rotationslaser (11) in einer Rotationsrichtung (23) um eine Rotationsachse (21) ausgesandt wird, wobei der Laserempfänger (12) eine Auswerteeinheit und mindestens ein Detektionsfeld (25) mit einem ersten Messbereich und einem zweiten Messbereich umfasst. Beim Auftreffen des Empfangsstrahls (24) auf das mindestens eine Detektionsfeld (25) des Laserempfängers (12) wird von der Auswerteeinheit ein erstes Empfangssignal, das den Zeitverlauf des auftreffenden Empfangsstrahls (24) im ersten Messbereich darstellt, und ein zweites Empfangssignal, das den Zeitverlauf des auftreffenden Empfangsstrahls (24) im zweiten Messbereich darstellt, bestimmt. Aus dem ersten und zweiten Empfangssignal wird von der Auswerteeinheit eine Bewegungsrichtung des Empfangsstrahls (24) relativ zum Laserempfänger (12) ermittelt und die Bewegungsrichtung des Empfangsstrahls (24) wird von der Auswerteeinheit mit der Rotationsrichtung (23) des rotierenden Laserstrahls (22) verglichen.

## Beschreibung

### Technisches Gebiet

Die vorliegende Erfindung betrifft ein Verfahren zum Vergleichen eines auf einen Laserempfänger auftreffenden Empfangsstrahls mit einem rotierenden Laserstrahl gemäß dem Oberbegriff des Anspruchs 1 sowie eine Vorrichtung zur Durchführung eines solchen Verfahrens gemäß dem Oberbegriff des Anspruchs 9.

### Stand der Technik

Rotationslaser werden im Innen- und Außenbereich für Nivellier- und Markierungsarbeiten eingesetzt, wie die Anzeige von horizontal, vertikal oder schräg verlaufenden Lasermarkierungen auf einer Zielfläche oder die Ermittlung und Überprüfung von waagerechten Höhenverläufen, senkrechten Linien, Fluchtlinien und Lotpunkten. Rotationslaser können in verschiedenen Gerätelagen, die als Horizontallage und Vertikallage ausgebildet sind, angeordnet werden. Dabei werden horizontal einsetzbare Rotationslaser, die ausschließlich in Horizontallage eingesetzt werden, und horizontal und vertikal einsetzbare Rotationslaser, die in Horizontallage und Vertikallage eingesetzt werden, unterschieden.

Bei Rotationslasern, die ohne Schutzmaßnahmen, wie Schutzbrillen, eingesetzt werden dürfen, ist die maximale Laserleistung begrenzt. Die erlaubten maximalen Laserleistungen führen bei Nivellier- und Markierungsarbeiten im Außenbereich häufig zu nicht oder schlecht sichtbaren Laserstrahlen. Um die Sichtbarkeit der Laserstrahlen zu verbessern, werden Zieltafeln oder Laserempfänger in den Laserstrahl gehalten. Laserempfänger werden als Handgerät von einem Bediener direkt in den Laserstrahl gehalten oder an einer Teleskop- oder Nivellierstange befestigt. Bekannte Laserempfänger umfassen eine Auswerteeinheit und mindestens ein Detektionsfeld mit einer Längsrichtung und einer Querrichtung, wobei der Laserempfänger in Abhängigkeit von der Gerätelage des Rotationslasers in einer Längsanordnung oder einer Queranordnung ausgerichtet wird.

Bei Nivellier- und Markierungsarbeiten kann es durch Fremdstrahlen oder Reflektionen des rotierenden Laserstrahls zu Fehlmessungen kommen. Bekannt sind verschiedene Verfahren zum Vergleichen eines auf den Laserempfänger auftreffenden Empfangsstrahls mit dem rotierenden Laserstrahl. Um das Risiko von Fehlmessungen mit einem Laserempfänger zu reduzieren, ist es bekannt, den rotierenden Laserstrahl des Rotationslasers mit einem Modulationssignal zu modulieren. Der auf den Laserempfänger auftreffende Empfangsstrahl wird von der Auswerteeinheit des Laserempfängers ausgewertet und als rotierender Laserstrahl eingestuft, wenn der Empfangsstrahl mit dem Modulationssignal moduliert wurde. Nachteilig ist, dass eine Reflektion des rotierenden Laserstrahls an einer Reflexionsfläche von der Auswerteeinheit nicht erkannt wird. Der reflektierte Laserstrahl wurde mit dem Modulationssignal moduliert und wird von der Auswerteeinheit des Laserempfängers als rotierender Laserstrahl eingestuft.

US 7,119,316 B2 offenbart ein weiteres bekanntes Verfahren zum Vergleichen eines auf einen Laserempfänger auftreffenden Empfangsstrahls mit einem rotierenden Laserstrahl, der von einem Rotationslaser ausgesandt wird. Der Laserempfänger umfasst ein Detektionsfeld, das in einer Längsrichtung aus mehreren Photodetektor-Arrays zusammengesetzt ist, wobei die Photodetektor-Arrays in Längsrichtung jeweils mehrere Photodetektoren umfassen. Beim Auftreffen eines Empfangsstrahls auf das Detektionsfeld werden von der Auswerteeinheit für jedes Photodetektor-Array erste und zweite Referenzsignale bestimmt, wobei das erste und zweite Referenzsignal die Amplituden der äußeren Photodetektoren des Photodetektor-Arrays darstellen, die vom Empfangsstrahl erfasst werden. Die Referenzsignale werden von der Auswerteeinheit durch Summenbildung, Differenzbildung und Quotientenbildung weiterverarbeitet, bis sich ein Quotient für die Bewertung ergibt. Dieser Quotient wird mit einem voreingestellten Grenzwert verglichen. Ist der Quotient kleiner als der Grenzwert, wird der Empfangsstrahl als Laserstrahl ("moving thin beam of laser light") eingestuft. Ist der Quotient grösser als der Grenzwert, wird der Empfangsstrahl als Fremdstrahl ("omni-directional pulse of light") eingestuft.

Aus US 7,224,473 B2 ist ein weiteres Verfahren zum Vergleichen eines auf einen Laserempfänger auftreffenden Empfangsstrahls mit einem rotierenden Laserstrahl bekannt. Der Laserempfänger umfasst ein Detektionsfeld, das in einer Längsrichtung aus mehreren Photodetektoren zusammengesetzt ist, und einen zusätzlichen Photodetektor. Beim Auftreffen eines Empfangsstrahls auf den Laserempfänger bestimmt die Auswerteeinheit ein erstes, zweites und drittes Referenzsignal, wobei das erste Referenzsignal den elektrischen Output eines ersten äußeren Photodetektors, der vom Empfangsstrahl erfasst wird, darstellt, das zweite Referenzsignal den elektrischen Output eines zweiten äußeren Photodetektors, der vom Empfangsstrahl erfasst wird, darstellt und das dritte Referenzsignal den elektrischen Output des zusätzlichen Photodetektors darstellt. Anhand des dritten Referenzsignals erfolgt eine Bewertung des Empfangsstrahls. Ist die Amplitude des dritten Referenzsignals hinreichend klein ("sufficiently low"), wird der Empfangsstrahl als Laserstrahl des Rotationslasers eingestuft. Ist die Amplitude des dritten Referenzsignals hingegen hinreichend groß ("sufficiently high"), wird der Empfangsstrahl als Fremdstrahl ("omni-directional pulse of light") eingestuft.

Die aus US 7,119,316 B2 und US 7,224,473 B2 bekannten Verfahren zum Verfahren zum Vergleichen eines auf einen Laserempfänger auftreffenden Empfangsstrahls mit einem rotierenden Laserstrahl eines Rotationslasers weisen den Nachteil auf, dass eine Reflektion des rotierenden Laserstrahls an einer Reflexionsfläche von der Auswerteeinheit des Laserempfängers nicht erkannt wird und fälschlicherweise als rotierender Laserstrahl eingestuft wird. Durch die Reflektion des rotierenden Laserstrahls an der Reflexionsfläche verändern sich die Amplituden der Referenzsignale nicht oder nur unwesentlich und haben keinen Einfluss auf Kriterien für die Bewertung des Empfangsstrahls.

### Darstellung der Erfindung

Die Aufgabe der vorliegenden Erfindung besteht in der Entwicklung eines Verfahrens zum Vergleichen eines auf einen Laserempfänger auftreffenden Empfangsstrahls mit einem rotierenden Laserstrahl, bei dem das Risiko von Fehlmessungen durch eine Reflektion des rotierenden Laserstrahls an einer Reflexionsfläche reduziert ist. Außerdem soll das Verfahren für eine weitgehend automatische Ausführung geeignet sein.

Diese Aufgabe wird bei dem eingangs genannten Verfahren zum Vergleichen eines auf einen Laserempfänger auftreffenden Empfangsstrahls mit einem rotierenden Laserstrahl erfindungsgemäß durch die Merkmale des unabhängigen Anspruchs 1 und bei der eingangs genannten Vorrichtung zur Durchführung eines solchen Verfahrens erfindungsgemäß durch die Merkmale des unabhängigen Anspruchs 9 gelöst. Vorteilhafte Weiterbildungen sind in den abhängigen Ansprüchen angegeben.

Das Verfahren zum Vergleichen eines auf einen Laserempfänger auftreffenden Empfangsstrahls mit einem rotierenden Laserstrahl, der von einem Rotationslaser in einer Rotationsrichtung um eine Rotationsachse ausgesandt wird, wobei der Laserempfänger eine Auswerteeinheit und mindestens ein Detektionsfeld mit einem ersten Messbereich und einem zweiten Messbereich umfasst, weist erfindungsgemäß die Schritte auf:
▪ beim Auftreffen des Empfangsstrahls auf das mindestens eine Detektionsfeld des Laserempfängers wird von der Auswerteeinheit ein erstes Empfangssignal, das den Zeitverlauf des auftreffenden Empfangsstrahls im ersten Messbereich darstellt, und ein zweites Empfangssignal, das den Zeitverlauf des auftreffenden Empfangsstrahls im zweiten Messbereich darstellt, bestimmt,
▪ aus dem ersten und zweiten Empfangssignal wird von der Auswerteeinheit eine Bewegungsrichtung des Empfangsstrahls relativ zum Laserempfänger ermittelt und
▪ die Bewegungsrichtung des Empfangsstrahls wird von der Auswerteeinheit mit der Rotationsrichtung des rotierenden Laserstrahls verglichen.

Beim erfindungsgemäßen Verfahren zum Vergleichen eines Empfangsstrahls mit einem rotierenden Laserstrahl weist das mindestens eine Detektionsfeld einen ersten und zweiten Messbereich auf und die Auswerteeinheit des Laserempfängers bestimmt ein erstes und zweites Empfangssignal. Das erste Empfangssignal stellt den Zeitverlauf des auftreffenden Empfangsstrahls im ersten Messbereich dar und das zweite Empfangssignal stellt den Zeitverlauf des auftreffenden Empfangsstrahls im zweiten Messbereich dar. Ein Laserempfänger, der mindestens ein Detektionsfeld mit einem ersten und zweiten Messbereich aufweist, ermöglicht es, eine Bewegungsrichtung des Empfangsstrahls relativ zum Laserempfänger zu ermitteln. Im Rahmen des erfindungsgemäßen Verfahrens ermittelt die Auswerteeinheit des Laserempfängers aus dem ersten und zweiten Empfangssignal eine Bewegungsrichtung des Empfangsstrahls relativ zum Laserempfänger und vergleicht die Bewegungsrichtung des Empfangsstrahls mit der Rotationsrichtung des rotierenden Laserstrahls.

Mit Hilfe des erfindungsgemäßen Verfahrens kann eine Reflektion des rotierenden Laserstrahls an einer Reflexionsfläche erkannt werden; außerdem können Fremdstrahlen, die nicht um eine Rotationsachse rotieren, vom rotierenden Laserstrahl unterschieden werden. Bei einem nicht rotierenden Fremdstrahl stimmen der Zeitverlauf des ersten Empfangssignals und der Zeitverlauf des zweiten Empfangssignals im Wesentlichen überein und die Auswerteeinheit kann aus dem ersten und zweiten Empfangssignal keine Bewegungsrichtung des Empfangsstrahls relativ zum Laserempfänger ermitteln. Durch den Vergleich der Bewegungsrichtung des Empfangsstrahls und der Rotationsrichtung des rotierenden Laserstrahls kann eine Reflektion des rotierenden Laserstrahls an einer Reflexionsfläche von der Auswerteeinheit erkannt werden. Der Rotationslaser bewegt den rotierenden Laserstrahl in einer bekannten Rotationsrichtung um die Rotationsachse. Wenn der rotierende Laserstrahl nach einer Reflektion an einer Reflexionsfläche als Empfangsstrahl auf den Laserempfänger auftrifft, ist die Bewegungsrichtung des Empfangsstrahls entgegengerichtet zur bekannten Rotationsrichtung des rotierenden Laserstrahls.

Die weiteren Verfahrensschritte des erfindungsgemäßen Verfahrens sind davon abhängig, ob die Auswerteeinheit aus dem ersten und zweiten Empfangssignal eine Bewegungsrichtung des Empfangsstrahls relativ zum Laserempfänger ermitteln kann. Abhängig von der Bewegungsrichtung des Empfangsstrahls können mit Hilfe des erfindungsgemäßen Verfahrens nicht rotierende Fremdstrahlen und reflektierte Laserstrahlen vom rotierenden Laserstrahl unterschieden werden.

Der Empfangsstrahl wird von der Auswerteeinheit als Fremdstrahl eingestuft, wenn der Zeitverlauf des ersten Empfangssignals und der Zeitverlauf des zweiten Empfangssignals im Wesentlichen übereinstimmen. Als Fremdstrahl wird jeder Strahl bezeichnet, der vom rotierenden Laserstrahl des Rotationslasers verschieden ist. Bei einem nicht rotierenden Fremdstrahl stimmen der Zeitverlauf des ersten Empfangssignals und der Zeitverlauf des zweiten Empfangssignals im Wesentlichen überein und die Auswerteeinheit kann aus dem ersten und zweiten Empfangssignal keine Bewegungsrichtung des Empfangsstrahls relativ zum Laserempfänger ermitteln.

Wenn der Zeitverlauf des ersten Empfangssignals vom Zeitverlauf des zweiten Empfangssignals verschieden ist, wird die Bewegungsrichtung des Empfangsstrahls von der Auswerteeinheit ermittelt. Dabei wird die Bewegungsrichtung des Empfangsstrahls als Hinrichtung definiert, wenn das erste Empfangssignal zeitlich vor dem zweiten Empfangssignal beginnt und/oder zeitlich vor dem zweiten Empfangssignal endet, und die Bewegungsrichtung des Empfangsstrahls wird als Rückrichtung definiert, wenn das zweite Empfangssignal zeitlich vor dem ersten Empfangssignal beginnt und/oder zeitlich vor dem ersten Empfangssignal endet.

Die weiteren Verfahrensschritte des erfindungsgemäßen Verfahrens sind davon abhängig, ob die Bewegungsrichtung des Empfangsstrahls und die Rotationsrichtung des rotierenden Laserstrahls gleichgerichtet oder entgegengerichtet sind. Das erfindungsgemäße Verfahren unterscheidet zwei Varianten: In einer ersten Variante sind die Bewegungsrichtung des Empfangsstrahls und die Rotationsrichtung des rotierenden Laserstrahls gleichgerichtet und in einer zweiten Variante sind die Bewegungsrichtung des Empfangsstrahls und die Rotationsrichtung des rotierenden Laserstrahls entgegengerichtet.

Wenn die Bewegungsrichtung des Empfangsstrahls und die Rotationsrichtung des rotierenden Laserstrahls gleichgerichtet sind, wird der Empfangsstrahl von der Auswerteeinheit als rotierender Laserstrahl eingestuft. Der Rotationslaser bewegt den rotierenden Laserstrahl in einer bekannten Rotationsrichtung um die Rotationsachse. Wenn der rotierende Laserstrahl ohne Reflektion an einer Reflexionsfläche als Empfangsstrahl auf den Laserempfänger auftrifft, ist die Bewegungsrichtung des Empfangsstrahls gleichgerichtet zur bekannten Rotationsrichtung des rotierenden Laserstrahls. Beim erfindungsgemäßen Verfahren wird der Empfangsstrahl von der Auswerteeinheit immer als rotierender Laserstrahl eingestuft, wenn die Bewegungsrichtung und die Rotationsrichtung gleichgerichtet sind.

Die Bewegungsrichtung des Empfangsstrahls ist bei einer geraden Anzahl an Reflektionen des rotierenden Laserstrahls ebenfalls gleichgerichtet zur bekannten Rotationsrichtung, so dass Empfangsstrahlen, die durch eine gerade Anzahl an Reflektionen des rotierenden Laserstrahls entstehen, von der Auswerteeinheit fälschlicherweise als rotierender Laserstrahl eingestuft werden. In der praktischen Anwendung von Rotationslasern und Laserempfängern stellt die einfache Reflektion des rotierenden Laserstrahls an einer Reflexionsfläche die häufigste Ursache von Fehlmessungen dar, so dass das erfindungsgemäße Verfahren das Risiko von Fehlmessungen zwar reduziert, aber Fehlmessungen nicht vollkommen verhindern kann.

Besonders bevorzugt wird der Laserempfänger von der Auswerteeinheit in einen Messmodus geschaltet, wobei im Messmodus eine Position des Empfangsstrahls in einer Längsrichtung des mindestens einen Detektionsfeldes bestimmt wird. Wenn ein auftreffender Empfangsstrahl von der Auswerteeinheit als rotierender Laserstrahl eingestuft wurde, kann der Laserempfänger wie vorgesehen eingesetzt werden. Dazu kann der Laserempfänger von der Auswerteeinheit in einen Messmodus geschaltet werden.

Wenn die Bewegungsrichtung des Empfangsstrahls und die Rotationsrichtung des rotierenden Laserstrahls entgegengerichtet sind, wird der Empfangsstrahl von der Auswerteeinheit als reflektierter Laserstrahl eingestuft. Der Rotationslaser bewegt den rotierenden Laserstrahl in einer bekannten Rotationsrichtung um die Rotationsachse. Wenn der rotierende Laserstrahl nach einer Reflektion an einer Reflexionsfläche als Empfangsstrahl auf den Laserempfänger auftrifft, ist die Bewegungsrichtung des Empfangsstrahls entgegengerichtet zur bekannten Rotationsrichtung des rotierenden Laserstrahls. Beim erfindungsgemäßen Verfahren wird der Empfangsstrahl von der Auswerteeinheit immer als reflektierter Laserstrahl eingestuft, wenn die Bewegungsrichtung und die Rotationsrichtung entgegengerichtet sind.

Die Bewegungsrichtung des Empfangsstrahls ist bei einer ungeraden Anzahl an Reflektionen des rotierenden Laserstrahls ebenfalls entgegengerichtet zur bekannten Rotationsrichtung, so dass Empfangsstrahlen, die durch eine ungerade Anzahl an Reflektionen des rotierenden Laserstrahls entstehen, von der Auswerteeinheit richtigerweise als reflektierter Laserstrahl eingestuft werden.

Beim erfindungsgemäßen Verfahren wird der rotierende Laserstrahl in einer bekannten Rotationsrichtung um die Rotationsachse bewegt. Die Auswerteeinheit des Laserempfängers ermittelt eine Bewegungsrichtung des Laserstrahls und vergleicht die Bewegungsrichtung mit der Rotationsrichtung des Rotationslasers. Dabei gilt es zu beachten, dass die Bewegungsrichtung von der Position des Laserempfängers abhängig ist und die absolute Bewegungsrichtung in einander gegenüberliegenden Positionen des Laserempfängers einander entgegen gerichtet ist. Die Position des Laserempfängers zum Rotationslaser kann mit Hilfe des rotierenden Laserstrahls bestimmt werden.

In einer bevorzugten Weiterentwicklung des Verfahrens wird der rotierende Laserstrahl um 360° um die Rotationsachse bewegt und der Winkel von 360° wird in einen ersten und zweiten Winkelbereich unterteilt, wobei sich der rotierende Laserstrahl im ersten und zweiten Winkelbereich in einer Strahleigenschaft oder in mehreren Strahleigenschaften unterscheidet. Im Rahmen des erfindungsgemäßen Verfahrens analysiert die Auswerteeinheit des Laserempfängers den auftreffenden Empfangsstrahl. Anhand der Strahleigenschaft, in der sich der rotierende Laserstrahl im ersten und zweiten Winkelbereich unterscheidet, kann die Auswerteeinheit den Winkelbereich bestimmen, in dem das mindestens eine Detektionsfeld des Laserempfängers vom Empfangsstrahl getroffen wurde.

Bevorzugt wird der rotierende Laserstrahl mit einem Modulationssignal moduliert, wobei im ersten Winkelbereich ein erstes Modulationssignal und im zweiten Winkelbereich ein zweites Modulationssignal, das vom ersten Modulationssignal verschieden ist, verwendet wird. Das erste und zweite Modulationssignal können sich in einer Amplitude, einer Form und/oder eine Modulationsfrequenz voneinander unterscheiden. Im Rahmen des erfindungsgemäßen Verfahrens analysiert die Auswerteeinheit des Laserempfängers den auftreffenden Empfangsstrahl und kann das Modulationssignal, mit dem der Empfangsstrahl moduliert wurde, bestimmen. Anhand des Modulationssignals kann die Auswerteeinheit den Winkelbereich bestimmen, in dem das mindestens eine Detektionsfeld des Laserempfängers vom Empfangsstrahl getroffen wurde.

Erfindungsgemäß ist zur Durchführung eines Verfahrens eine Vorrichtung mit einem Rotationslaser, der einen in einer Rotationsrichtung um eine Rotationsachse rotierenden Laserstrahl aussendet, und einem Laserempfänger, der eine Auswerteeinheit und mindestens ein Detektionsfeld mit einem ersten Messbereich und einem zweiten Messbereich umfasst, vorgesehen. In einer ersten Variante sind der Rotationslaser in einer Vertikallage und der Laserempfänger in einer Queranordnung ausgerichtet. Dabei gilt für die Ausrichtung, dass die Rotationsachse des Rotationslasers und die Längsrichtung des mindestens einen Detektionsfeldes senkrecht zu einer Gravitationsrichtung des Gravitationsfeldes ausgerichtet sind und die Querrichtung des mindestens einen Detektionsfeldes parallel zur Gravitationsrichtung ausgerichtet ist. In einer zweiten Variante sind der Rotationslaser in einer Horizontallage und der Laserempfänger in einer Längsanordnung ausgerichtet. Dabei gilt für die Ausrichtung, dass die Rotationsachse des Rotationslasers und die Längsrichtung des mindestens einen Detektionsfeldes parallel zur Gravitationsrichtung ausgerichtet sind und die Querrichtung des mindestens einen Detektionsfeldes senkrecht zur Gravitationsrichtung ausgerichtet ist.

Bevorzugt umfasst der Laserempfänger ein erstes Detektionsfeld und ein beabstandetes zweites Detektionsfeld, wobei das erste Detektionsfeld den ersten Messbereich und das zweite Detektionsfeld den zweiten Messbereich aufweist.

Besonders bevorzugt weist der Laserempfänger einen Neigungssensor auf, der eine Neigung des Laserempfängers relativ zu einer Gravitationsrichtung des Gravitationsfeldes misst. Der Neigungssensor kann dazu genutzt werden, die Ausrichtung des Laserempfängers eindeutig zu definieren. Bei der Ausführung des erfindungsgemäßen Verfahrens ist der Laserempfänger in Längs- oder in Queranordnung ausgerichtet, wobei die Längs- bzw. Querrichtung des Detektionsfeldes parallel und die Quer- bzw. Längsrichtung des Detektionsfeldes senkrecht zur Lotrichtung verlaufen sollten. Die Längs bzw. Querrichtung des Detektionsfeldes und die Gravitationsrichtung können gleichgerichtet oder entgegengerichtet sein. Mit Hilfe des Neigungssensors können die beiden Ausrichtungen "gleichgerichtet" und "entgegengerichtet" voneinander unterschieden werden.

Besonders bevorzugt sind der Rotationslaser und der Laserempfänger über eine Kommunikationsverbindung kommunizierend verbindbar, wobei die Kommunikation zwischen der Auswerteeinheit des Laserempfängers und einer Kontrolleinheit des Rotationslasers erfolgt. Bei der Ausführung des erfindungsgemäßen Verfahrens ermittelt die Auswerteeinheit des Laserempfängers aus dem ersten und zweiten Empfangssignal eine Bewegungsrichtung des Empfangsstrahls relativ zum Laserempfänger und vergleicht die Bewegungsrichtung des Empfangsstrahls mit der Rotationsrichtung des rotierenden Laserstrahls. Die Rotationsrichtung des rotierenden Laserstrahls kann vom Rotationslaser über die Kommunikationsverbindung an die Auswerteeinheit des Laserempfängers übermittelt werden, so dass das erfindungsgemäße Verfahren automatisch durchgeführt werden kann.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine Vorrichtung mit einem Rotationslaser, der einen rotierenden Laserstrahl aussendet, und einem Laserempfänger;
- FIGN. 2A, B: den Rotationslaser und Laserempfänger der FIG. 1 in einer ersten Anordnung, in der Rotationslaser in Horizontallage und der Laserempfänger in Längsanordnung ausgerichtet sind (FIG. 2A), und in einer zweiten Anordnung, in der Rotationslaser in Vertikallage und der Laserempfänger in Queranordnung ausgerichtet sind (FIG. 2B);
- FIG. 3: den Aufbau des Laserempfängers im Detail und das Zusammenwirken des mit dem Rotationslaser in Form eines Blockdiagramms;
- FIG. 4: ein erstes und zweites Empfangssignal, die der rotierende Laserstrahl des Rotationslasers beim Auftreffen auf einen ersten und zweiten Messbereich des Laserempfängers erzeugt;
- FIG. 5: ein erstes und zweites Empfangssignal, die der rotierende Laserstrahl des Rotationslasers nach einer Reflektion an einer Reflexionsfläche beim Auftreffen auf den ersten und zweiten Messbereich des Laserempfängers erzeugt;
- FIG. 6: ein erstes und zweites Empfangssignal, die ein als Fremdstrahl ausgebildeter Empfangsstrahl beim Auftreffen auf den ersten und zweiten Messbereich des Laserempfängers erzeugt; und
- FIG. 7: eine alternative Ausführungsform eines Laserempfängers mit einem ersten Detektionsfeld und einem zweiten Detektionsfeld.

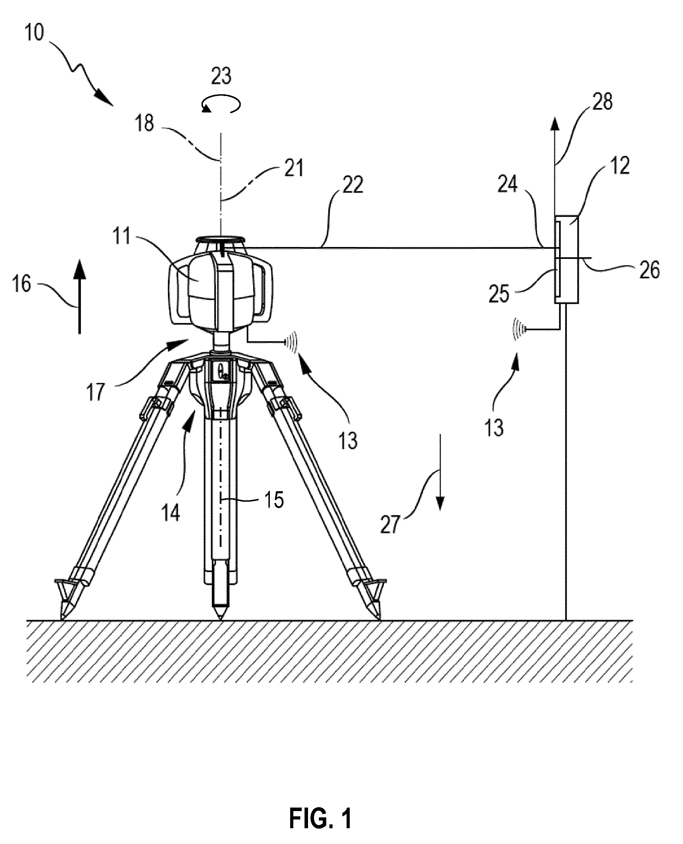

**FIG. 1** zeigt eine Vorrichtung **10** mit einem Rotationslaser **11** und einem Laserempfänger **12,** die über eine Kommunikationsverbindung **13** verbindbar sind. Die Kommunikationsverbindung 13 ist als drahtlose Kommunikationsverbindung oder als drahtgebundene Kommunikationsverbindung ausgebildet. Der Rotationslaser 11 ist in einer Horizontallage angeordnet, die für horizontale Anwendungen des Rotationslasers 11 vorgesehen ist, und der Laserempfänger 12 ist in einer Längsanordnung angeordnet.

Der Rotationslaser 11 ist auf einem motorisierten Stativ **14** angeordnet, das eine automatische Höheneinstellung des Rotationslasers 11 entlang einer Achse **15** in einer Höhenrichtung **16** (Doppelpfeil) ermöglicht. Zusätzlich kann eine Drehplattform **17** vorgesehen sein, die eine automatische Winkeleinstellung des Rotationslasers 11 um eine Drehachse **18** der Drehplattform 17 ermöglicht. Die Drehplattform 17 kann in das Stativ 14 oder den Rotationslaser 11 integriert sein oder als separate Komponente, die auf dem Stativ 14 angeordnet wird, ausgebildet sein. Der Rotationslaser 11 ist als horizontal und vertikal einsetzbarer Rotationslaser ausgebildet, der einen um eine Rotationsachse **21** des Rotationslasers 11 rotierenden Laserstrahl **22** aussendet. Der rotierende Laserstrahl 22 rotiert in einer Rotationsrichtung **23** um die Rotationsachse 21 und erzeugt eine Laserebene, die senkrecht zur Rotationsachse 21 des Rotationslasers 11 angeordnet ist.

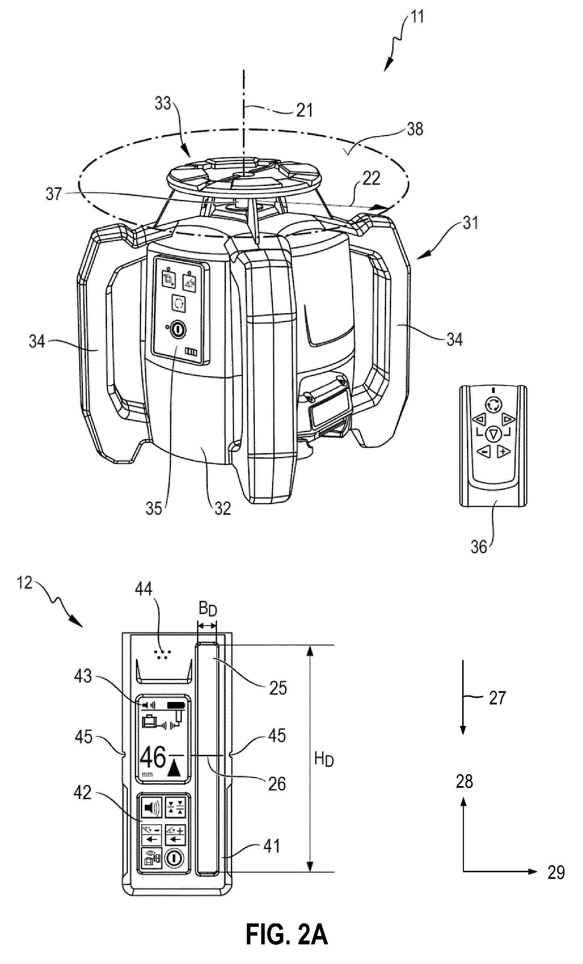

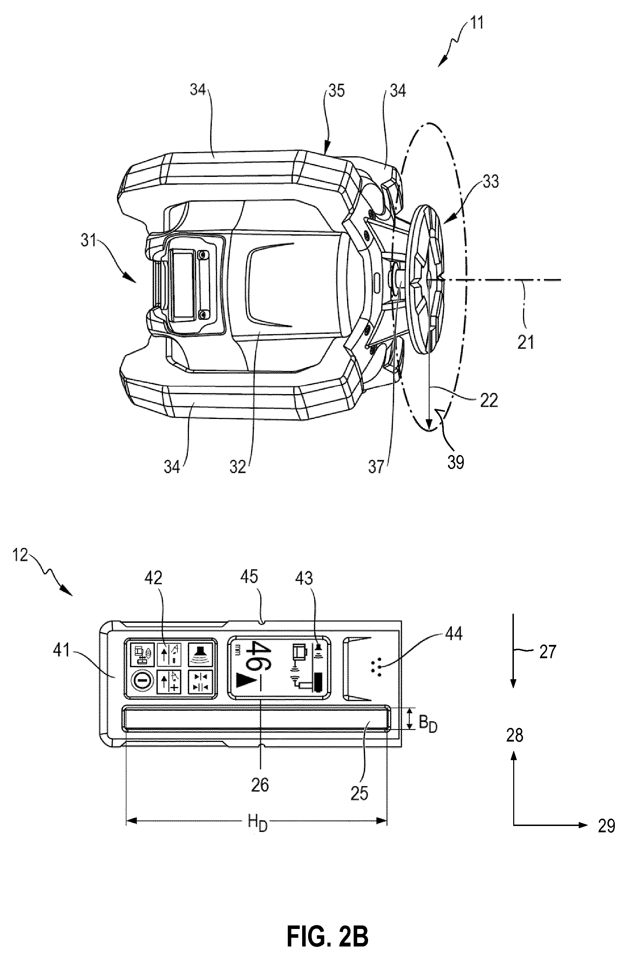

Der Laserempfänger 12 ist mit einer Höhenmessfunktion ausgestattet, die eine Auftreffposition eines Empfangsstrahls **24** auf einem Detektionsfeld **25** des Laserempfängers 12 ermittelt und den Abstand des Empfangsstrahls 24 zu einer Nullposition **26** des Detektionsfeldes 25 als Höhenposition darstellt. Die Ausrichtung des Laserempfängers 12 ist mittels des Detektionsfeldes 25 und einer Gravitationsrichtung **27** des Gravitationsfeldes definiert. Das Detektionsfeld 25 des Laserempfängers 12 weist in einer Längsrichtung **28** eine Detektionshöhe und in einer Querrichtung **29** (siehe FIGN. 2A, B) eine Detektionsbreite auf. Die Längsrichtung 28 entspricht der Messrichtung des Laserempfängers 12 und die Querrichtung 29 ist senkrecht zur Längsrichtung 28 ausgerichtet. Als Längsanordnung wird die Ausrichtung des Laserempfängers 12 bezeichnet, in der die Längsrichtung 28 des Detektionsfeldes 25 parallel und die Querrichtung 29 des Detektionsfeldes 25 senkrecht zur Gravitationsrichtung 27 ausgerichtet sind, und als Queranordnung wird die Ausrichtung des Laserempfängers 12 bezeichnet, in der die Längsrichtung 28 des Detektionsfeldes 25 senkrecht und die Querrichtung 29 des Detektionsfeldes 25 parallel zur Gravitationsrichtung 27 ausgerichtet sind.

**FIGN. 2A****, B** zeigen den Rotationslaser 11 und den Laserempfänger 12 der FIG. 1 in einer dreidimensionalen Darstellung. Dabei zeigt FIG. 2A den Rotationslaser 11 in Horizontallage und den Laserempfänger 12 in Längsanordnung (FIG. 2A) und FIG. 2B zeigt den Rotationslaser 11 in Vertikallage und den Laserempfänger 12 in Queranordnung.

Der Rotationslaser 11 umfasst ein Gerätegehäuse **31** und eine im Gerätegehäuse 31 angeordnete Messeinrichtung. Das Gerätegehäuse 31 besteht aus einem Grundgehäuse **32,** einem Rotationskopf **33** und mehreren Handgriffen **34.** Die Bedienung des Rotationslasers 11 erfolgt über eine Bedienungseinrichtung **35,** die in das Grundgehäuse 32 integriert ist und von außen bedienbar ist. Neben der in das Grundgehäuse 32 integrierten Bedienungseinrichtung 35 kann eine Fernbedienung **36** vorgesehen sein, die über eine Kommunikationsverbindung mit dem Rotationslaser 11 verbindbar ist. Die Messeinrichtung des Rotationslasers 11 erzeugt im Inneren des Grundgehäuses 32 einen Laserstrahl, der auf eine um die Rotationsachse 18 rotierende Umlenkoptik **37** trifft. Der Laserstrahl wird von der Umlenkoptik 37 um 90° umgelenkt und bildet den rotierenden Laserstrahl 22 des Rotationslasers 11, der eine Laserebene aufspannt. Der rotierende Laserstrahl 22 erzeugt in Horizontallage des Rotationslasers 11 eine horizontale Laserebene **38** und in Vertikallage des Rotationslasers 11 eine vertikale Laserebene **39.**

Der Laserempfänger 12 umfasst ein Empfängergehäuse **41,** eine Bedienungseinrichtung **42,** ein optisches Display **43,** einen Lautsprecher **44** und das Detektionsfeld 25. Das Detektionsfeld 25 weist in der Längsrichtung 28 eine Detektionshöhe **H_{D}** und in der Querrichtung 29 eine Detektionsbreite **B_{D}** auf. Die Bedienungseinrichtung 42, das optische Display 43, der Lautsprecher 44 und das Detektionsfeld 25 sind in das Empfängergehäuse 41 des Laserempfängers 12 integriert. Über das optische Display 43 kann der Bediener Informationen über den Laserempfänger 12 ablesen. Dazu gehören beispielsweise ein Ladezustand des Laserempfängers 12, Informationen über die Kommunikationsverbindung 13 zu einem Rotationslaser 11 und die eingestellte Lautstärke des Lautsprechers 44. Außerdem kann der Abstand des Empfangsstrahls 24 zur Nullposition 26 des Laserempfängers 12 als numerischer Wert optisch angezeigt werden. Alternativ oder zusätzlich zur optischen Anzeige auf dem optischen Display 43 kann der Abstand des Empfangsstrahls 24 über den Lautsprecher 44 mitgeteilt werden. Die Nullposition 26 des Detektionsfeldes 25 wird am Empfängergehäuse 41 über Markierungskerben **45** angezeigt.

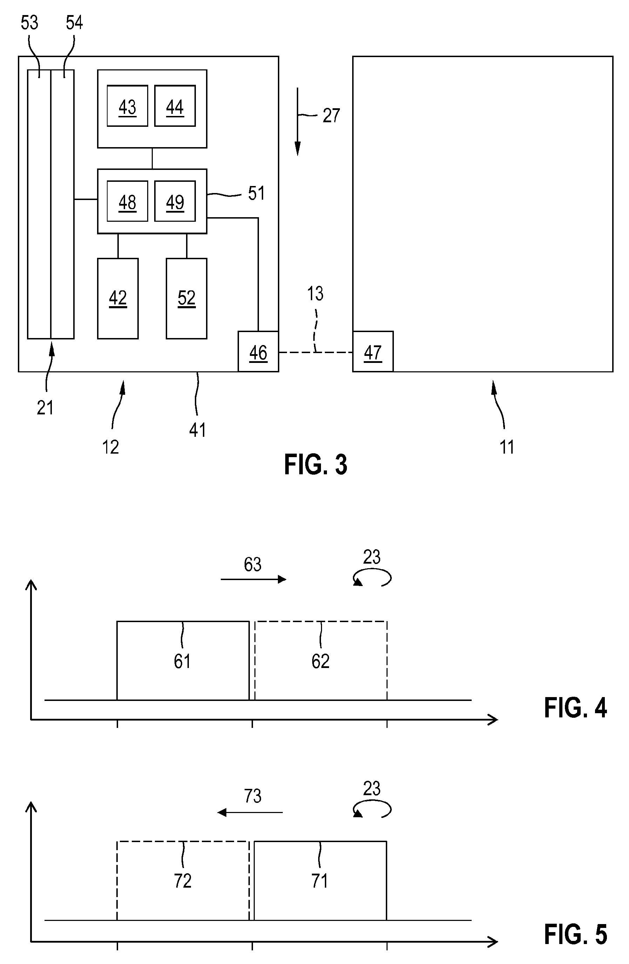

**FIG. 3** zeigt den Aufbau des Laserempfängers 12 im Detail und das Zusammenwirken des Laserempfängers 12 mit dem Rotationslaser 11 in Form eines Blockdiagramms. Die Kommunikation zwischen dem Laserempfänger 12 und dem Rotationslaser 11 kann über die Kommunikationsverbindung 13 erfolgen, die eine erste Sende- und Empfangseinheit **46** im Laserempfänger 12 mit einer zweiten Sende- und Empfangseinheit **47** im Rotationslaser 11 verbindet. Die erste und zweite Sende- und Empfangseinheit 46, 47 sind beispielsweise als Funkmodule ausgebildet und die Kommunikation zwischen dem Laserempfänger 12 und dem Rotationslaser 11 erfolgt über eine als Funkverbindung ausgebildete Kommunikationsverbindung 13.

Das Detektionsfeld 25, das optische Display 43 und der Lautsprecher 44 sind mit einer Auswerteeinheit **48** verbunden, die im Inneren des Empfängergehäuses 41 angeordnet ist. Die Auswerteeinheit 48 ist mit einer Steuereinheit **49** zur Steuerung des Laserempfängers 12 verbunden, wobei die Auswerteeinheit 48 und die Steuereinheit 49 in eine beispielsweise als Mikrocontroller ausgebildete Kontrolleinheit **51** integriert sind. Der Laserempfänger 12 kann zusätzlich einen Neigungssensor **52** umfassen, der im Inneren des Empfängergehäuses 41 angeordnet und der mit der Kontrolleinheit 41 verbunden ist. Mit Hilfe des Neigungssensors 52 kann eine Neigung des Laserempfängers 12 relativ zur Gravitationsrichtung 27 des Gravitationsfeldes gemessen werden. Der Neigungssensor 52 kann beispielsweise einen 2-Achsen-Beschleunigungssensor oder zwei 1-Achs-Beschleunigungssensoren umfassen.

Das Detektionsfeld 25 weist einen ersten Messbereich **53** und einen zweiten Messbereich **54** auf, die im Ausführungsbeispiel benachbart ausgebildet sind. Beim Auftreffen des Empfangsstrahls 24 auf das Detektionsfeld 25 des Laserempfängers 12 bestimmt die Auswerteeinheit 48 ein erstes Empfangssignal, das den Zeitverlauf des auftreffenden Empfangsstrahls 24 im ersten Messbereich 53 darstellt, und ein zweites Empfangssignal, das den Zeitverlauf des auftreffenden Empfangsstrahls 24 im zweiten Messbereich 54 darstellt. Die Auswerteeinheit 48 ermittelt aus dem ersten und zweiten Empfangssignal eine Bewegungsrichtung des Empfangsstrahls 24 relativ zum Laserempfänger 12 und vergleicht die Bewegungsrichtung des Empfangsstrahls 24 mit der Rotationsrichtung 23 des rotierenden Laserstrahls 22. Die Rotationsrichtung 23 des rotierenden Laserstrahls 22 wird vom Rotationslaser 11 über die Kommunikationsverbindung 13 an die Auswerteeinheit 48 des Laserempfängers 12 übermittelt oder vom Bediener über die Bedienungseinrichtung 42 eingegeben.

**FIG. 4** zeigt ein erstes und zweites Empfangssignal **61, 62,** die der rotierende Laserstrahl 22 des Rotationslasers 11 beim Auftreffen auf den ersten und zweiten Messbereich 53, 54 des Laserempfängers 12 erzeugt. Das erste Empfangssignal 61 stellt den Zeitverlauf des auftreffenden rotierenden Laserstrahls im ersten Messbereich 53 dar und das zweite Empfangssignal 62 stellt den Zeitverlauf des auftreffenden rotierenden Laserstrahls im zweiten Messbereich 54 dar. Das erste Empfangssignal 61 beginnt zeitlich vor dem zweiten Empfangssignal 62 und endet zeitlich vor dem zweiten Empfangssignal 62.

Die Auswerteeinheit 48 ermittelt aus dem Verlauf des ersten und zweiten Empfangssignals 61, 62 eine Bewegungsrichtung **63** des Empfangsstrahls 24 relativ zum Laserempfänger 12 und vergleicht die Bewegungsrichtung 63 mit der Rotationsrichtung 23 des rotierenden Laserstrahls. Die Bewegungsrichtung 63 des Empfangsstrahls 24 und die Rotationsrichtung 23 des rotierenden Laserstrahls 22 sind gleichgerichtet. Der Empfangsstrahl 24 wird von der Auswerteeinheit 48 als rotierender Laserstrahl eingestuft und der Laserempfänger 12 wird von der Auswerteeinheit 48 in einen Messmodus geschaltet. Im Messmodus des Laserempfängers 12 kann die Position des rotierenden Laserstrahls 22 in Längsrichtung 28 des Detektionsfeldes 25 bestimmt werden oder eine Höheneinstellung des rotierenden Laserstrahls 22 erfolgen.

**FIG. 5** zeigt ein erstes und zweites Empfangssignal **71, 72,** die der rotierende Laserstrahl 22 nach einer Reflektion an einer Reflexionsfläche beim Auftreffen auf den ersten und zweiten Messbereich 53, 54 des Laserempfängers 12 erzeugt. Das erste Empfangssignal 71 stellt den Zeitverlauf des reflektierten Laserstrahls im ersten Messbereich 53 dar und das zweite Empfangssignal 72 stellt den Zeitverlauf des reflektierten Laserstrahls im zweiten Messbereich 54 dar. Das zweite Empfangssignal 72 beginnt zeitlich vor dem ersten Empfangssignal 71 und endet zeitlich vor dem ersten Empfangssignal 71.

Die Auswerteeinheit 48 ermittelt aus dem Verlauf des ersten und zweiten Empfangssignals 71, 72 eine Bewegungsrichtung 73 des Empfangsstrahls 24 relativ zum Laserempfänger 12 und vergleicht die Bewegungsrichtung 73 mit der Rotationsrichtung 23 des rotierenden Laserstrahls 22. Die Bewegungsrichtung 73 des Empfangsstrahls 24 und die Rotationsrichtung 23 des rotierenden Laserstrahls 22 sind entgegengerichtet und der Empfangsstrahl 24 wird von der Auswerteeinheit 48 als reflektierter Laserstrahl eingestuft.

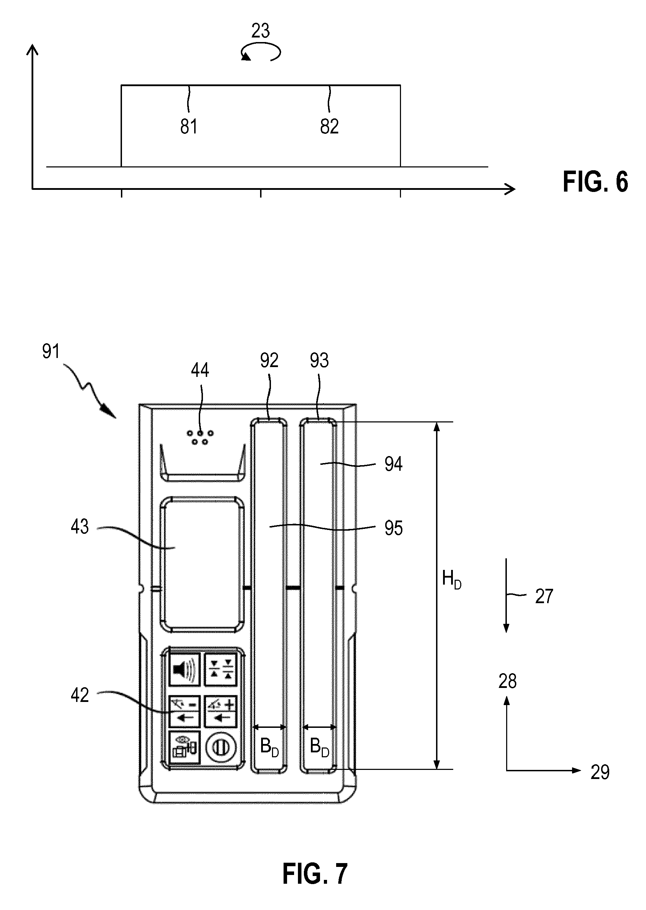

**FIG. 6** zeigt ein erstes und zweites Empfangssignal **81, 82,** die ein als Fremdstrahl ausgebildeter Empfangsstrahl beim Auftreffen auf den ersten und zweiten Messbereich 53, 54 des Laserempfängers 12 erzeugt. Das erste Empfangssignal 81 stellt den Zeitverlauf des Fremdstrahls im ersten Messbereich 53 dar und das zweite Empfangssignal 82 stellt den Zeitverlauf des Fremdstrahls im zweiten Messbereich 54 dar. Der Zeitverlauf des ersten und zweiten Empfangssignals 81, 82 stimmt im Wesentlichen überein. Das erste und zweite Empfangssignal 81, 82 beginnen zeitlich zur gleichen Zeit und enden zeitlich zur gleichen Zeit.

Die Auswerteeinheit 48 versucht aus dem Verlauf des ersten und zweiten Empfangssignals 81, 82 eine Bewegungsrichtung des Empfangsstrahls 24 relativ zum Laserempfänger 12 zu ermitteln. Da der Zeitverlauf des ersten Empfangssignals 81 und der Zeitverlauf des zweiten Empfangssignals 82 übereinstimmen, kann die Auswerteeinheit 48 keine Bewegungsrichtung des Empfangsstrahls 24 ermitteln und der Empfangsstrahl 24 wird von der Auswerteeinheit 48 als Fremdstrahl eingestuft.

**FIG.** 7 zeigt eine alternative Ausführungsform eines Laserempfängers **91** mit einem ersten Detektionsfeld **92** und einem beabstandeten zweiten Detektionsfeld **93.** Dabei weist das erste Detektionsfeld 92 einen ersten Messbereich **94** und das zweite Detektionsfeld 93 einen zweiten Messbereich **95** auf. Der Laserempfänger 91 kann den Laserempfänger 12 in der Vorrichtung 10 der FIG. 1 ersetzen. Die Laserempfänger 12, 91 unterscheiden sich in der Anzahl der Detektionsfelder. Beim Laserempfänger 12 der FIG. 1 sind der erste und zweite Messbereich 53, 54 in ein Detektionsfeld integriert, wohingegen beim Laserempfänger 91 der FIG. 7 der erste Messbereich 94 im ersten Detektionsfeld 92 und der zweite Messbereich 95 im zweiten Detektionsfeld 93 angeordnet sind.

Die Laserempfänger 12, 91 sind bis auf die Detektionsfelder analog aufgebaut und umfassen neben den Detektionsfeldern das Empfängergehäuse 41, die Bedienungseinrichtung 42, das optisches Display 43 und den Lautsprecher 44. Die Detektionsfelder 92, 93 weisen in der Längsrichtung 28 die Detektionshöhe H_{D} und in der Querrichtung 29 die Detektionsbreite B_{D} auf. Die Bedienungseinrichtung 42, das optische Display 43, der Lautsprecher 44 und die Detektionsfelder 92, 93 sind in das Empfängergehäuse 41 des Laserempfängers 91 integriert.

Beim Auftreffen des Empfangsstrahls 24 auf das erste oder zweite Detektionsfeld 92, 93 des Laserempfängers 91 bestimmt die Auswerteeinheit 48 ein erstes Empfangssignal, das den Zeitverlauf des auftreffenden Empfangsstrahls 24 im ersten Messbereich 94 darstellt, und ein zweites Empfangssignal, das den Zeitverlauf des auftreffenden Empfangsstrahls 24 im zweiten Messbereich 95 darstellt. Die Auswerteeinheit 48 ermittelt aus dem ersten und zweiten Empfangssignal eine Bewegungsrichtung des Empfangsstrahls 24 relativ zum Laserempfänger 12 und vergleicht die Bewegungsrichtung des Empfangsstrahls 24 mit der Rotationsrichtung 23 des rotierenden Laserstrahls 22.

Bei der Ausführung des erfindungsgemäßen Verfahrens wird der rotierende Laserstrahl 22 in einer bekannten Rotationsrichtung 23 um die Rotationsachse 21 bewegt. Die Auswerteeinheit 48 des Laserempfängers 12 ermittelt eine Bewegungsrichtung des Laserstrahls 22 und vergleicht die Bewegungsrichtung mit der Rotationsrichtung 23 des Rotationslasers 11. Dabei gilt es zu beachten, dass die Bewegungsrichtung von der Position des Laserempfängers 12 abhängig ist und die absolute Bewegungsrichtung in einander gegenüberliegenden Positionen des Laserempfängers 12 einander entgegen gerichtet ist. Die Position des Laserempfängers 12 zum Rotationslaser 11 kann mit Hilfe des rotierenden Laserstrahls 22 bestimmt werden.

Der Rotationslaser 11 startet seine Rotation um die Rotationsachse 21 in einem Rotationswinkel, der als Nullwinkel bezeichnet wird. Ausgehend vom Nullwinkel kann ein positiver Winkelbereich zwischen 0° und +180° und ein negativer Winkelbereich zwischen 0° und - 180° definiert werden. Der rotierende Laserstrahl 22 wird um 360° um die Rotationsachse 21 bewegt und der Winkel von 360° wird in einen ersten und zweiten Winkelbereich unterteilt, beispielsweise kann der positive Winkelbereich zwischen 0° und +180° als erster Winkelbereich und der negative Winkelbereich zwischen 0° und -180° als zweiter Winkelbereich definiert werden. Zur Unterscheidung des ersten und zweiten Winkelbereichs weist der rotierende Laserstrahl 22 im ersten und zweiten Winkelbereich mindestens eine unterschiedliche Strahleigenschaft auf. Anhand der Strahleigenschaft, in der sich der rotierende Laserstrahl 22 im ersten und zweiten Winkelbereich unterscheidet, kann die Auswerteeinheit 48 des Laserempfängers 12 den Winkelbereich bestimmen, in dem das Detektionsfeld 25 des Laserempfängers 12 vom Empfangsstrahl 24 getroffen wurde.

Als Strahleigenschaft, die zur Unterscheidung des ersten und zweiten Winkelbereichs genutzt werden kann, eignet sich beispielsweise ein Modulationssignal. Dabei wird im ersten Winkelbereich ein erstes Modulationssignal und im zweiten Winkelbereich ein zweites Modulationssignal, das vom ersten Modulationssignal verschieden ist, verwendet. Das erste und zweite Modulationssignal können sich in einer Amplitude, einer Form und/oder eine Modulationsfrequenz voneinander unterscheiden. Im Rahmen des erfindungsgemäßen Verfahrens analysiert die Auswerteeinheit 48 des Laserempfängers 12 den auftreffenden Empfangsstrahl 24 und kann das Modulationssignal, mit dem der Empfangsstrahl 24 moduliert wurde, bestimmen. Anhand des Modulationssignals kann die Auswerteeinheit 48 den Winkelbereich bestimmen, in dem das Detektionsfeld 25 des Laserempfängers 12 vom Empfangsstrahl 24 getroffen wurde.

## Patentansprüche

1. Verfahren zum Vergleichen eines auf einen Laserempfänger (12; 91) auftreffenden Empfangsstrahls (24) mit einem rotierenden Laserstrahl (22), der von einem Rotationslaser (11) in einer Rotationsrichtung (23) um eine Rotationsachse (21) ausgesandt wird, wobei der Laserempfänger (12) eine Auswerteeinheit (48) und mindestens ein Detektionsfeld (25; 92, 93) mit einem ersten Messbereich (53; 94) und einem zweiten Messbereich (54; 95) umfasst, **gekennzeichnet durch** die Verfahrensschritte:
▪ beim Auftreffen des Empfangsstrahls (24) auf das mindestens eine Detektionsfeld (25; 92, 93) des Laserempfängers (12; 91) wird von der Auswerteeinheit (48) ein erstes Empfangssignal (61; 71; 81), das den Zeitverlauf des auftreffenden Empfangsstrahls (24) im ersten Messbereich (53; 94) darstellt, und ein zweites Empfangssignal (62; 72; 82), das den Zeitverlauf des auftreffenden Empfangsstrahls (24) im zweiten Messbereich (54; 95) darstellt, bestimmt,
▪ aus dem ersten und zweiten Empfangssignal (61, 62; 71, 72; 81, 82) wird von der Auswerteeinheit (48) eine Bewegungsrichtung (63; 73) des Empfangsstrahls (24) relativ zum Laserempfänger (12; 91) ermittelt und
▪ die Bewegungsrichtung (63; 73) des Empfangsstrahls (24) wird von der Auswerteeinheit (48) mit der Rotationsrichtung (23) des rotierenden Laserstrahls (22) verglichen.

2. Verfahren nach Anspruch 1, **dadurch gekennzeichnet, dass** der Empfangsstrahl (24) von der Auswerteeinheit (48) als Fremdstrahl eingestuft wird, wenn der Zeitverlauf des ersten Empfangssignals (81) und der Zeitverlauf des zweiten Empfangssignals (82) im Wesentlichen übereinstimmen.

3. Verfahren nach Anspruch 1, **dadurch gekennzeichnet, dass** die Bewegungsrichtung (63; 73) des Empfangsstrahls (24) von der Auswerteeinheit (48) ermittelt wird, wenn der Zeitverlauf des ersten Empfangssignals (61; 71) vom Zeitverlauf des zweiten Empfangssignals (62; 72) verschieden ist.

4. Verfahren nach Anspruch 3, **dadurch gekennzeichnet, dass** der Empfangsstrahl (24) von der Auswerteeinheit (48) als rotierender Laserstrahl eingestuft wird, wenn die Bewegungsrichtung (63) des Empfangsstrahls (24) und die Rotationsrichtung (23) des rotierenden Laserstrahls (22) gleichgerichtet sind.

5. Verfahren nach Anspruch 4, **dadurch gekennzeichnet, dass** der Laserempfänger (12) von der Auswerteeinheit (48) in einen Messmodus geschaltet wird, wobei im Messmodus eine Position des Empfangsstrahls (24) in einer Längsrichtung (28) des mindestens einen Detektionsfeldes (25; 92, 93) bestimmt wird.

6. Verfahren nach Anspruch 3, **dadurch gekennzeichnet, dass** der Empfangsstrahl (24) von der Auswerteeinheit (48) als reflektierter Laserstrahl eingestuft wird, wenn die Bewegungsrichtung (73) des Empfangsstrahls (24) und die Rotationsrichtung (23) des rotierenden Laserstrahls (22) entgegengerichtet sind.

7. Verfahren nach Anspruch 1, **dadurch gekennzeichnet, dass** der rotierende Laserstrahl (22) um 360° um die Rotationsachse (21) bewegt wird und der Winkel von 360° in einen ersten und zweiten Winkelbereich unterteilt wird, wobei sich der rotierende Laserstrahl (22) im ersten und zweiten Winkelbereich in einer Strahleigenschaft oder in mehreren Strahleigenschaften unterscheidet.

8. Verfahren nach Anspruch 7, **dadurch gekennzeichnet, dass** der rotierende Laserstrahl (22) mit einem Modulationssignal moduliert wird, wobei im ersten Winkelbereich ein erstes Modulationssignal und im zweiten Winkelbereich ein zweites Modulationssignal, das vom ersten Modulationssignal verschieden ist, verwendet wird.

9. Vorrichtung (10) mit einem Rotationslaser (11), der einen in einer Rotationsrichtung (23) um eine Rotationsachse (21) rotierenden Laserstrahl (22) aussendet, und einem Laserempfänger (12; 91), der eine Auswerteeinheit (48) und mindestens ein Detektionsfeld (25; 92, 93) mit einem ersten Messbereich (53; 94) und einem zweiten Messbereich (54; 95) umfasst, zur Durchführung eines Verfahrens nach einem der Ansprüche 1 bis 8.

10. Vorrichtung nach Anspruch 9, **dadurch gekennzeichnet, dass** der Laserempfänger (91) ein erstes Detektionsfeld (92) und ein beabstandetes zweites Detektionsfeld (93) umfasst, wobei das erste Detektionsfeld (92) den ersten Messbereich (94) und das zweite Detektionsfeld (93) den zweiten Messbereich (95) aufweist.

11. Vorrichtung nach einem der Ansprüche 9 bis 10, **dadurch gekennzeichnet, dass** der Laserempfänger (12; 91) einen Neigungssensor (52) aufweist, der eine Neigung des Laserempfängers (12; 91) relativ zu einer Gravitationsrichtung (27) des Gravitationsfeldes misst.

12. Vorrichtung nach einem der Anspruch 9 bis 11, **dadurch gekennzeichnet, dass** der Rotationslaser (11) und der Laserempfänger (12; 91) über eine Kommunikationsverbindung (13) kommunizierend verbindbar sind, wobei die Kommunikation zwischen der Auswerteeinheit (48) des Laserempfängers (12; 91) und einer Kontrolleinheit des Rotationslasers (11) erfolgt.
